Europäisches Patentamt

European Patent Office

Office européen des brevets

(11) Veröffentlichungsnummer: **0 299 323 B1**

(12) **EUROPÄISCHE PATENTSCHRIFT**

(45) Veröffentlichungstag der Patentschrift: **04.03.92**

(21) Anmeldenummer: **88110662.9**

(22) Anmeldetag: **04.07.88**

(51) Int. Cl.⁵: **H02J 9/06**

---

(54) **Stromversorgungseinrichtung.**

---

(30) Priorität: **17.07.87 DE 3723727**

(43) Veröffentlichungstag der Anmeldung:
**18.01.89 Patentblatt 89/03**

(45) Bekanntmachung des Hinweises auf die
Patenterteilung:
**04.03.92 Patentblatt 92/10**

(84) Benannte Vertragsstaaten:
**AT CH DE ES FR GB IT LI SE**

(56) Entgegenhaltungen:
**DE-A- 3 525 061**
**US-A- 4 531 214**

(73) Patentinhaber: **SIEMENS AKTIENGESELL-**
**SCHAFT**
**Wittelsbacherplatz 2**
**W-8000 München 2(DE)**

(72) Erfinder: **Hein, Gerd, Dipl.-Phys.**
**Sudetenring 47**
**W-8522 Herzogenaurach(DE)**

## Beschreibung

Die Erfindung bezieht sich auf eine Stromversorgungseinrichtung mit einem geregelten Leistungsausgang, einem zweiten geregelten Ausgang und einem geregelten Pufferausgang, der mittels eines Puffer-Busses mit mehreren Schreib-Lese-Speichern eines Rechners verbunden ist, wobei bei normalem Betrieb die Schreib-Lese-Speicher mittels eines niederohmigen Schalters mit dem geregelten Leistungsausgang verbunden sind, wobei der niederohmige Schalter mittels eines Schaltsignals gesteuert wird und wobei die Pufferbatterie über einen Schalter mit dem geregelten Pufferausgang verknüpft ist.

Im Handel sind Stromversorgungseinrichtungen für Rechner erhältlich, die mehrere geregelte Ausgangsspannungen liefern. Dabei sind die Rechnerbaugruppen mittels eines DC-Busses mit einem geregelten Leistungsausgang der Stromversorgungseinrichtung verbunden. Die dynamischen Schreib-Lese-Speicher des Rechners sind mittels eines Puffer-Busses mit einem weiteren geregelten Ausgang verbunden, der bei einem Netzausfall von einer Puffer-Batterie versorgt wird. Die Schreib-Lese-Speicher benötigen eine Gleichspannung von 5 V und einen Strom im Aktiv-Betrieb von 3,5 A und im stand-by-Betrieb von 1,5 A. Diese Stromversorgung der Schreib-Lese-Speicher wird mittels einer Nachregelung einer bereits bestehenden Spannung der Stromversorgungseinrichtung oder mittels einer eigens dafür gebildeten Spannungsversorgung bewerkstelligt. Bei einer Nachregelung einer bereits bestehenden Spannung muß mittels eines steuerbaren Schalters, einer Glättungseinrichtung, eines Strom-Spannungsregelkreises und einer Ansteuerschaltung des Schalters diese Spannung auf die Spannungswerte der Schreib-Lese-Speicher geregelt werden. Da die Pufferung der Schreib-Lese-Speicher bis zur Tiefentladung der Batterie arbeiten muß, ist die Ansteuerschaltung des steuerbaren Schalters diskret aus Bauteilen aufgebaut. Nachteilig an einer solchen Nachregelung einer bereits bestehenden Spannung oder einer eigens für die Versorgung der Schreib-Lese-Speicher aufgebaute Stromversorgung ist, daß jeweils die Stromversorgungseinrichtung umfangreich an Bauteilen ist und damit ein großes Bauvolumen einnimmt. Aus der DE-A- 3 525 061 ist eine Stromversorgungseinrichtung der eingangs genannten Art, auf die das o.g. zutrifft, bekannt.

Der Erfindung liegt nun die Aufgabe zugrunde, eine Stromversorgungseinrichtung der eingangs genannten Art so auszubilden, daß keine eigene, von der Rechnerstromversorgung unabhängige oder aus einer anderen Stromversorgung mittels Nachregelung abgeleitete Stromversorgung für die Anspeisung des Pufferausgangs erforderlich ist.

Diese Aufgabe wird erfindungsgemäß durch die folgenden Merkmale gelöst:
- die Schreib-Lese-Speicher sind bei Normalbetrieb in einen Aktiv-Betrieb und bei Netzausfall auf einen stand-by-Betrieb geschaltet,
- die Pufferbatterie ist über einen zweiten Schalter und einen Längsregler mit dem Pufferausgang verbunden,
- im Normalbetrieb wird die Stromversorgung der Speicher aus der geregelten Spannungsversorgung für die Rechnerbaugruppen über den niederohmigen Schalter abgeleitet, so daß der Pufferausgang über die Hauptregelung mitgeregelt wird.

Der niederohmige Schalter wird in vorteilhafter Weise so gesteuert, daß der hohe Strom des Leistungsausganges der Stromversorgungseinrichtung auf einen Stromwert von 3,5 A im Aktiv-Betrieb der Schreib-Lese-Speicher geregelt wird. Dazu benötigt man nur eine Stromerfassungsvorrichtung. Im stand-by-Betrieb werden die Schreib-Lese-Speicher aus einer Puffer-Batterie versorgt, die über einen zweiten Schalter mit einem Längsregler mit dem Pufferausgang verbunden ist, wobei der Längsregler die Batteriespannung auf die Versorgungsspannung der Schreib-Lese-Speicher herunterregelt und den Strom auf einen stand-by-Stromwert begrenzt. Während des Normalbetriebs der Stromversorgungseinrichtung ist die Puffer-Batterie durch den zweiten Schalter vom Pufferausgang getrennt, damit die Puffer-Batterie nicht in den Pufferausgang Leistung einspeist und somit sich entlädt. Durch die niederohmige Verbindung des Leistungsausganges mit dem Pufferausgang wird der Pufferausgang über die Hauptregelung mitgeregelt, wodurch nur noch der Strom des Pufferausganges mittels einer Strombegrenzung auf einen Aktiv-Stromwert der Schreib-Lese-Speicher begrenzt werden braucht. Dadurch verringert sich der Bauteileaufwand und das Bauvolumen der Stromversorgungseinrichtung wesentlich.

Die Puffer-Batterie ist in bevorzugter Ausführung über einen Ladezweig, bestehend aus einem zweiten Längsregler und einem Relais, mit dem zweiten geregelten Ausgang verbunden, wobei der Verbindungspunkt zwischen dem zweiten Längsregler und dem Relais mit einem Eingang des zweiten Schalters verknüpft ist. Durch diesen Ladezweig wird die Batterie laufend geladen, wobei der Längsregler die zweite geregelte Ausgangsspannung auf eine Ladespannung herunterregelt. Damit die Batterie im stand-by-Betrieb der Schreib-Lese-Speicher nicht tiefentladen wird, ist das Relais vorgesehen. Dieses Relais wird auch bei Überspannungen angesteuert.

Beim Einschalten des niederohmigen Schalters geht der zweite Schalter nach einer bevorzugten Ausführung erst nach einer vorbestimmten Zeitdifferenz in den Off-Zustand über und beim Auftreten eines Fehlers im Netz geht der niederohmige Schalter erst nach einer vorbestimmten Zeitdifferenz, nachdem der zweite Schalter geschlossen ist, in den Off-Zustand über. Durch diese zeitliche Überlappung des niederohmigen Schalters und des zweiten Schalters ist eine lückenlose Spannungsversorgung der gepufferten Schreib-Lese-Speicher unabhängig vom Netzzustand oder dem Zustand der Stromversorgungseinrichtung gewährleistet. Außerdem wird dafür gesorgt, daß bei Auftreten eines Fehlers im Netz genügend Zeit vorhanden ist, um aktuelle Daten in den Rechnerbaugruppen in die im stand-by-Betrieb geschalteten Schreib-Lese-Speicher zu übertragen.

Zur weiteren Erläuterung der Erfindung wird auf die Zeichnung Bezug genommen, in der ein Ausführungsbeispiel nach der Erfindung schematisch veranschaulicht ist.

FIG 1      zeigt ein Blockschaltbild einer Stromversorgungseinrichtung mit einem Rechner, wobei in

FIG 2      ein Blockschaltbild der erfindungsgemäßen Stromversorgungseinrichtungdargestellt ist, die

FIG 3      und 4 zeigen Zustandssignale des Netzes und der Stromversorgungseinrichtung in einem Diagramm über der Zeit t aufgetragen, die

FIG 5      zeigt ein Datenrettsignal in einem Diagramm über der Zeit t aufgetragen und die

FIG 6      und 7 zeigen Schaltsignale in einem Diagramm über der Zeit t aufgetragen.

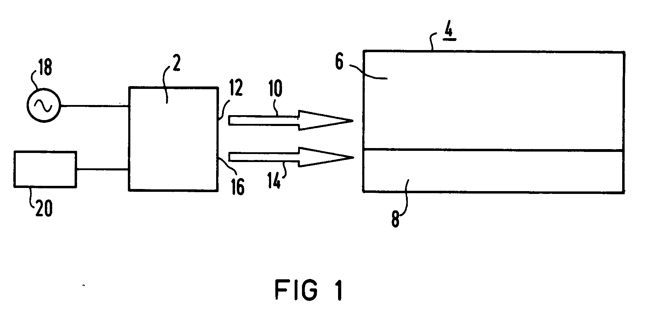

In der FIG 1 ist eine Stromversorgungseinrichtung 2 als Block dargestellt, die einen Rechner 4 versorgt. Der Rechner 4 besteht aus Rechnerbaugruppen 6 und aus mehreren Schreib-Lese-Speicher, die gemeinsam als Block 8 dargestellt sind. Die Rechnerbaugruppen 6 sind mittels eines DC-Busses 10 mit einem geregelten Leistungsausgang 12 der Stromversorgungseinrichtung 2 verbunden. Die Schreib-Lese-Speicher 8 sind über einen Puffer-Bus 14 mit einem Pufferausgang 16 der Stromversorgungseinrichtung 2 verknüpft. Eingangsseitig ist die Stromversorgungseinrichtung 2 einerseits mit einem Wechselstromnetz 18 und andererseits mit einer Puffer-Batterie 20 verknüpft. Die Puffer-Batterie 20 ist dafür vorgesehen, daß bei einem Netzausfall oder einer Unterbrechung für eine Anzahl von Schreib-Lese-Speichern 8, die auf einen stand-by-Betrieb geschaltet wurden, der benötigte Strombedarf von der Puffer-Batterie 20 geliefert wird. Dadurch können Daten aus dem Rechner 4 noch in den Schreib-Lese-Speichern 8 gerettet werden.

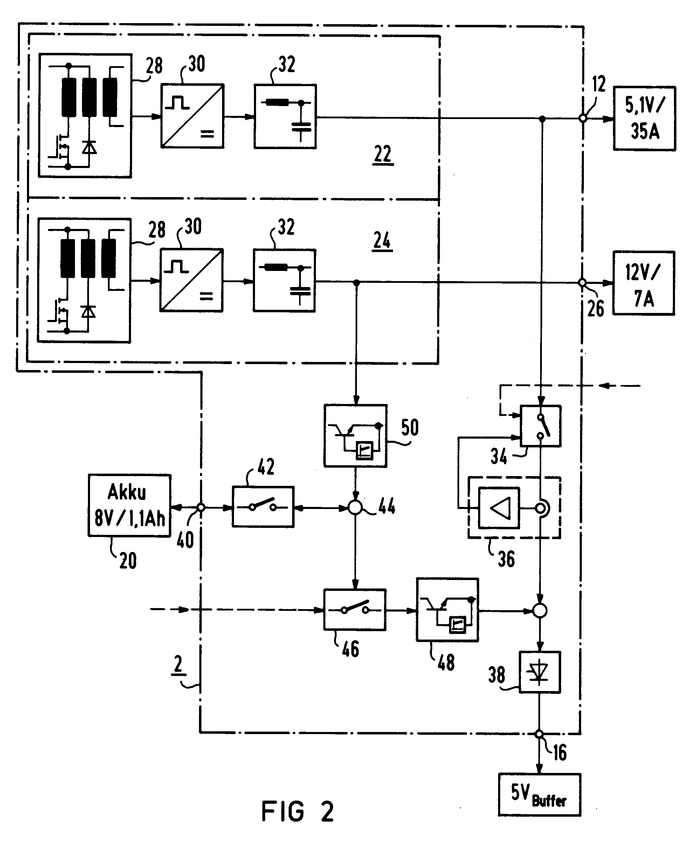

Die FIG 2 zeigt ein Blockschaltbild der Stromversorgungseinrichtung 2 nach FIG 1. Diese Stromversorgungseinrichtung 2 hat zwei primär getaktete Schaltnetzteile 22 und 24, wobei das Schaltnetzteil 22 am Leistungsausgang eine geregelte Spannung mit einer Amplitude von 5,1 V und einen Strom mit einer Amplitude von 35 A liefert. Das Schaltnetzteil 24 liefert an seinem Ausgang 26 eine Spannung mit einer Amplitude von 12 V und einen Strom mit einer Amplitude von 7 A. Die beiden primär getakteten Schaltnetzteile bestehen jeweils aus einem Block 28, der aus der Netzwechselspannung eine Pulsfolge erzeugt. Diese Umwandlung ist aus Übersichtlichkeitsgründen nur mit einem Übertrager mit einem primären Schalter angedeutet. Die erzeugte Pulsfolge wird mittels eines Wandlers 30 in eine pulsierende Gleichspannung gewandelt, die über ein Dämpfungsglied 32, bestehend aus einer Drossel und einem Kondensator, geglättet wird. Steuerteile und Regler der primär getakteten Schaltnetzteile 22 und 24 sind aus Übersichtlichkeitsgründen nicht dargestellt. Der Ausgang des Dämpfungsgliedes 32 des Schaltnetzteils 22 ist einerseits mit dem geregelten Leistungsausgang 12 der Stromversorgungseinrichtung 2 und andererseits über einen niederohmigen Schalter 34, einer Stromerfassungsvorrichtung 36 und einem Überspannungsschutz 38 mit dem Pufferausgang 16 der Stromversorgungseinrichtung 2 verknüpft. Eine Puffer-Batterie 20, die den einen Eingang 40 der Stromerfassungsvorrichtung 2 angeschlossen ist, wird über ein Relais 42, einen Verbindungspunkt 44, einen zweiten Schalter 46 und einen Längsregler 48 mit dem Überspannungsschutz 38 verbunden. Als Puffer-Batterie 20 steht eine 8 V/1,1 Ah Bleiakku zur Verfügung. Der Verbindungspunkt 44 ist außerdem über einen weiteren Längsregler 50 mit dem Ausgang des Dämpfungsgliedes 32 des Schaltnetzteils 24 verknüpft. Über diesen Längsregler 50 wird die Puffer-Batterie 20 ständig nachgeladen, d.h. der Längsregler 50 regelt die Ausgangsspannung des Schaltnetzteils 24 von 12 V auf eine Ladespannung von 9 V / 0,5 A herunter. Der Längsregler 48 regelt im Puffer-Betrieb die Batteriespannung von 8 V auf 4,9 V bis 5,1 V, wobei gleichzeitig der Strom für den stand-by-Betrieb der Schreib-Lese-Speicher 8 auf 1,5 A begrenzt wird. Der niederohmige Schalter 34 wird mittels eines Schaltsignals $U_{S1}$ in Abhängigkeit des Speisenetzes gesteuert.

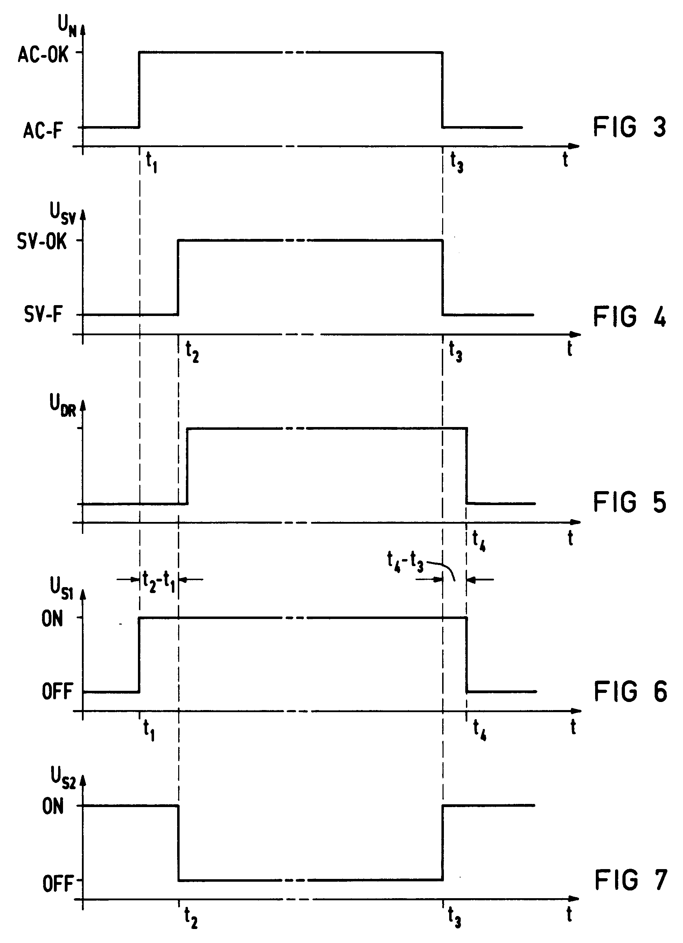

Anhand der FIG 3 bis 7 wird die Funktionsweise der Stromversorgungseinrichtung 2 nach FIG 2 erläutert. In FIG 3 ist ein Zustandssignal $U_N$ des Netzes in einem Diagramm über der Zeit t aufgetragen, wobei ein High-Zustand AC-OK anzeigt, daß das Netz in Ordnung ist. Der Low-Zustand AC-F zeigt an, daß das Netz einen Fehler hat, beispielsweise ein Netzausfall oder eine Netzunterbrechung. Zum Zeitpunkt $t_1$ kehrt die Netzspannung wieder, wodurch das Zustandssignal $U_N$ vom Low-Zustand AC-F in den High-Zustand AC-OK springt. Durch diese Wiederkehr des Netzes werden die geregelten Ausgangsspannungen der Stromversorgungseinrichtung 2 aufgebaut, die zum Zeitpunkt $t_2$ durch einen High-Zustand SV-OK des Zustandssignals $U_{SV}$ der Stromversorgungseinrichtung 2 gemäß FIG 4 anzeigt, daß die Ausgangsspannungen in Ordnung sind. Mit der Wiederkehr des Netzes wird der niederohmige Schalter 34 geschlossen, das durch ein High-Signal ON des Schaltsignals $U_{S1}$ gemäß FIG 6 dargestellt ist. Zu diesem Zeitpunkt $t_1$ ist der zweite Schalter 46 noch eingeschaltet. Dies ist durch das High-Signal ON des Schaltsignals $U_{S2}$ gemäß FIG 7 dargestellt. Erst zum Zeitpunkt $t_2$ , d.h. wenn die Ausgangsspannungen der Stromversorgungseinrichtung 2 aufgebaut sind, wird der zweite Schalter 46 geöffnet, d.h. das Schaltsignal $U_{S2}$ geht gemäß FIG 7 vom High-Zustand ON in den Low-Zustand OFF über. Die Zeitdifferenz $t_2 - t_1$ beträgt etwa 100 - 200 msec. Durch diese zeitliche Überlappung wird eine lückenlose Spannungsversorgung gewährleistet. Ab dem Zeitpunkt $t_2$ befindet sich die Stromversorgungseinrichtung 2 im Betriebszustand "normaler Netzbetrieb". In diesem Betriebszustand sind die Schreib-Lese-Speicher 8 des Rechners 4 im Aktiv-Zustand und werden aus dem primär getakteten Netzteil 22 mittels des niederohmigen Schalters 34 und des Puffer-Busses 14 mit einem Strom, dessen Amplitude auf 3,5 A begrenzt ist, versorgt.

Somit wird die Ausgangsspannung am Pufferausgang 16 vom Netzteil 22 mitgeregelt. Gleichzeitig wird die Puffer-Batterie 20 über den Längsregler 50 ständig nachgeladen.

Zum Zeitpunkt $t_3$ gelangt das Zustandssignal $U_N$ des Netzes vom High-Zustand AC-OK infolge eines Fehler im Low-Zustand AC-F gemäß FIG 3. Zum selben Zeitpunkt geht auch das Zustandssignal $U_{SV}$ der Stromversorgungseinrichtung 2 vom High-Zustand SV-OK in den Low-Zustand SV-F über, gemäß FIG 4. Gleichzeitig mit diesen Signalen $U_N$ und $U_{SV}$ wird der zweite Schalter 46 geschlossen, gekennzeichnet durch den Wechsel des Schaltsignals $U_{S2}$ vom Low-Zustand OFF in den High-Zustand ON zum Zeitpunkt $t_3$ gemäß FIG 7. Zum Zeitpunkt $t_3$ bleibt der niederohmige Schalter 34 noch geschlossen. Erst zum Zeitpunkt $t_4$ wird der niederohmige Schalter 34 geöffnet, gekennzeichnet durch den Wechsel des Schaltsignals $U_{S1}$ vom High-Zustand ON in den Low-Zustand OFF gemäß FIG 6. Außerdem wechselt das Datenrettsignal $U_{DR}$ vom High-Zustand in den Low-Zustand gemäß FIG 5. Die Zeitdifferenz $t_4 - t_3$ ist so bemessen, daß die Daten im Rechner 4 innerhalb dieser Zeitdifferenz $t_4 - t_3$ in die Schreib-Lese-Speicher 8 gelesen werden können und daß die Schreib-Lese-Speicher 8 vom Aktiv-Zustand in den stand-by-Zustand umgeschaltet werden können. Die Zeitdifferenz $t_4 - t_3$ beträgt etwa 2 bis 2,9 msec. Ab diesem Zeitpunkt $t_4$ befindet sich die Stromversorgungseinrichtung 2 im stand-by-Betrieb, wobei die Schreib-Lese-Speicher 8 aus der Puffer-Batterie 20 mit einen auf 1,5 A begrenzten Strom versorgt werden. Damit die Puffer-Batterie 20 nicht tiefentladen wird, ist als Schutz das Relais 42 vorgesehen.

Somit erhält man eine Stromversorgungseinrichtung 2, deren Bauteileaufwand verringert ist, wodurch das Bauvolumen verkleinert werden konnte, ohne dabei die technischen Anforderungen einer solchen Stromversorgungseinrichtung 2 zu verringern.

**Patentansprüche**

1. Stromversorgungseinrichtung (2) mit einem geregelten Leistungsausgang (12), einem zweiten geregelten Ausgang (26) und einem geregelten Pufferausgang (16), der mittels eines Puffer-Busses (14) mit mehreren Schreib-Lese-Speichern (8) eines Rechners (4) verbunden ist, wobei bei normalem Betrieb die Schreib-Lese-Speicher (8) mittels eines niederohmigen Schalters (34) mit dem geregelten Leistungsausgang (12) verbunden sind, wobei der niederohmige Schalter (34) mittels eines Schaltsignals ($U_{S1}$) gesteuert wird und wobei die Pufferbatterie (20) über einen Schalter mit dem geregelten Pufferausgang (16) verknüpft ist, **gekennzeichnet durch die folgenden Merkmale :**
   - die Schreib-Lese-Speicher (8) sind bei Normalbetrieb in einen Aktiv-Betrieb und bei Netzausfall auf einen Stand-by-Betrieb
   geschaltet,
   - die Pufferbatterie (20) ist über einen zweiten Schalter (46) und einen Längsregler (48) mit dem Pufferausgang (16) verbunden,
   - im Normalbetrieb wird die Stromversorgung der Speicher (8) aus der geregelten Spannungsversorgung für die Rechnerbaugruppen über den niederohmigen Schalter (34) abgeleitet, so daß der Pufferausgang (16) über die Hauptregelung mitgeregelt wird.

2. Stromversorgungseinrichtung (2) nach Anspruch 1, **dadurch gekennzeichnet,** daß die Puffer-Batterie (20) über einen Ladezweig, bestehend aus einem zweiten Längsregler (50) und einem Relais (42), mit dem zweiten geregelten Ausgang (26) verbunden ist, wobei der Verbindungspunkt (44) zwischen dem zweiten Längsregler (50) und dem Relais (42) mit einem Eingang des zweiten Schalters (46) verknüpft ist.

3. Stromversorgungseinrichtung (2) nach Anspruch 1, **dadurch gekennzeichnet,** daß beim Einschalten des niederohmigen Schalters (34) der zweite Schalter (46) erst nach einer vorbestimmten Zeitdifferenz ($t_2$ - $t_1$) in den Off-Zustand übergeht und daß beim Auftreten eines Fehlers im Netz der niederohmige Schalter (34) erst nach einer vorbestimmten Zeitdifferenz ($t_4$ - $t_3$), nachdem der zweite Schalter (46) geschlossen ist, in den Off-Zustand übergeht.

## Claims

1. Current supply device (2) having a controlled power output (12), a second controlled output (26) and a controlled buffer output (16) connected by means of a buffer bus (14) with several read-write memories (8) of a computer (4), in which during normal operation the read-write memories (8) are connected with the controlled power output (12) by means of a low-resistance switch (34), the low-resistance switch (34) is controlled by means of a switching signal ($U_{S1}$) and the buffer battery (20) is linked with the controlled buffer output (16) by way of a switch, characterised by the following features:
   - the read-write memories (8) are switched during normal operation into active operation and in the case of power mains failure to standby operation;
   - the buffer battery (20) is connected with the buffer output (16) by way of a second switch (46) and an in-phase controller (48);
   - during normal operation, the current supply of the memories (8) is derived from the controlled voltage supply for the computer assemblies by way of the low-resistance switch (34) so that the buffer output (16) is also controlled by way of the main control.

2. Current supply device (2) according to claim 1, characterised in that the buffer battery (20) is connected with the second controlled output (26) by way of a charging branch consisting of a second in-phase controller (50) and a relay (42), the connection point (44) between the second in-phase controller (50) and the relay (42) being linked with an input of the second switch (46).

3. Current supply device (2) according to claim 1, characterised in that when the low-resistance switch (34) is closed, the second switch (46) only enters the off-state after a predetermined time difference ($t_2$ - $t_1$) and in that when an error occurs in the power mains the low-resistance switch (34) only enters the off-state after a predetermined time difference ($t_4$ - $t_3$) after the second switch (46) is closed.

## Revendications

1. Dispositif d'alimentation en courant électrique (2) comportant une sortie de puissance réglée (12), une seconde sortie réglée (26) et une sortie tampon réglée (16), qui est raccordée au moyen d'un bus tampon (14) à plusieurs mémoires d'enregistrement-lecture (8) d'un calculateur (4), et dans lequel, lors du fonctionnement normal, les mémoires d'enregistrement-lecture (8) sont raccordées au moyen d'un interrupteur de faible valeur ohmique (34) à la sortie réglée de puissance (12), et l'interrupteur de faible valeur ohmique (34) est commandé au moyen d'un signal de commutation ($U_S$) alors que la batterie tampon (20) est combinée par l'intermédiaire d'un interrupteur à la sortie tampon réglée (16), caractérisé par les caractéristiques suivantes :
   - les mémoires d'enregistrement-lecture (8) sont branchées dans un fonctionnement actif lors du fonctionnement normal et dans un fonctionnement d'attente lors d'une défaillance du réseau,
   - la batterie-tampon (20) qui est raccordée par l'intermédiaire d'un second interrupteur (46) et d'un régulateur longitudinal (48) à la sortie tampon (16),
   - lors du fonctionnement normal, l'alimentation en courant des mémoires (8) est obtenue à partir de l'alimentation en tension réglée pour les modules du calculateur, par l'intermédiaire de l'interrupteur de faible valeur ohmique (34), de sorte que la sortie tampon (16) est réglée conjointement par l'intermédiaire de la régulation principale.

2. Dispositif d'alimentation en courant (2) suivant la revendication 1, caractérisé par le fait que la batterie-tampon (20) est raccordée par l'intermédiaire d'une branche de charge, constituée par un second régulateur longitudinal (50) et un relais (42), à la seconde sortie réglée (26), le point de jonction (44) entre le second régulateur longitudinal (50) et le relais (42) étant raccordé à une entrée du second interrupteur (46).

3. Dispositif d'alimentation en courant (2) suivant la revendication 1, caractérisé par le fait que, lors de la fermeture de l'interrupteur de faible valeur ohmique (34), le second interrupteur (46) passe à l'état bloqué uniquement au bout d'un intervalle de temps prédéterminé $(t_2-t_1)$, et que lors de l'apparition d'un défaut dans le réseau, l'interrupteur de faible valeur ohmique (36) ne passe à l'état bloqué qu'au bout d'un intervalle de temps $(t_4-t_3)$,après la fermeture du second interrupteur (46).

FIG 1

FIG 2

FIG 3

FIG 4

FIG 5

FIG 6

FIG 7